Europäisches Patentamt

European Patent Office

Office européen des brevets

(11) Veröffentlichungsnummer: **0 062 822**
**B2**

(12) **NEUE EUROPÄISCHE PATENTSCHRIFT**

(45) Veröffentlichungstag der neuen Patentschrift:
**07.12.88**

(21) Anmeldenummer: **82102613.5**

(22) Anmeldetag: **29.03.82**

(51) Int. Cl.⁴: **B 32 B 27/08,** B 65 D 1/28

(54) Verbundfolien und Tiefziehverpackungen hieraus.

(30) Priorität: **11.04.81 DE 3114771**

(43) Veröffentlichungstag der Anmeldung:
**20.10.82 Patentblatt 82/42**

(45) Bekanntmachung des Hinweises auf die Patenterteilung:
**29.05.85 Patentblatt 85/22**

(45) Bekanntmachung des Hinweises auf die Entscheidung
über den Einspruch:
**07.12.88 Patentblatt 88/49**

(84) Benannte Vertragsstaaten:
**AT BE CH DE FR GB IT LI NL SE**

(56) Entgegenhaltungen:
**DE-B- 2 538 892**
**FR-A- 2 208 784**
**FR-A- 2 295 840**
**US-A- 3 661 677**

**Firmenschrift BASF Ultramid KR 4600 (8.75)**

(73) Patentinhaber: **Wolff Walsrode Aktiengesellschaft,**
**Postfach, D-3030 Walsrode 1 (DE)**

(72) Erfinder: **Ermert, Wolfgang, Dr., Am Hang 24,**
**D-3032 Fallingbostel (DE)**
Erfinder: **Funk, Hans Werner, Ahornstrasse 38,**
**D-3036 Bomlitz 1 (DE)**
Erfinder: **Klein, Rudi, OT Krelingen im Sande 86,**
**D-3030 Walsrode 1 (DE)**

(74) Vertreter: **Zobel, Manfred, Dr. et al, c/o BAYER AG**
**Konzernverwaltung RP Patentabteilung Bayerwerk,**
**D-5090 Leverkusen (DE)**

EP 0 062 822 B2

## Beschreibung

Gegenstand der vorliegenden Erfindung sind durch Tiefziehen schrumpffähige Verbundfolien auf Copolyamiden und Ethylencopolymerisaten, die sich insbesondere zur Verpackung von Lebensmitteln, wie Fleisch- und Wurstwaren, auf Tiefziehanlagen eignen.

Verbundfolien aus Polyamiden, vorzugsweise PA-6 und Polyethylen wurden bereits für die Lebensmittelverpackung verwendet. Beim Einsatz dieser Verbundfolien als Vakuum-Verpackungen auf Tiefziehanlagen treten jedoch Falten um das verpackte Produkt auf. Diese Falten stören nicht nur optisch, sondern können auch leicht eine Beschädigung der Verpackung durch Durchstossen bei mechanischer Beanspruchung verursachen.

Es besteht daher ein erheblicher Bedarf, Tiefziehverpackungen, insbesondere Lebensmittelverpackungen zur Verfügung zu stellen, die ein faltenfreies Aussehen aufweisen.

Aus der DE-AS 2 538 892 ist bereits ein Verfahren zur Herstellung von Verbundfolien aus Polyethylen und aus Polyamid bekannt. Das Polyamid besteht zu 80–90 Gewichtsteilen aus ε-Caprolactam und zu 10–20 Gewichtsteilen aus AH-Salz. Das Polyethylen kann ein Mischpolymeres sein, welches zum überwiegenden Teil aus Ethylen-Einheiten aufgebaut ist.

Aus der BASF-Firmenschrift Ultramid KR 4600 (August 1975) ist bekannt, darin angegebene Polyamid-Komponenten für die Herstellung von coextrudierten Polyamid/Polyethylen-Verbundfolien einzusetzen, welche zum Beispiel nach dem Thermoformverfahren weiterverarbeitet werden. Das Schrumpfverhalten genügt aber nicht den Anforderungen.

Gegenstand der Erfindung ist eine durch Tiefziehen schrumpffähige Verbundfolie, die aus

1) mindestens einer Schicht aus wenigstens einem Copolyamid mit Laurinlactam- und mit mindestens 50 Gew.-% ε-Caprolactameinheiten und einer Schmelztemperatur im Bereich von 75–215°C, vorzugsweise 160–200°C, und gegebenenfalls einem verseiften Ethylen/Vinylacetatcopolymerisat und/oder Ionomerenharz,
2) mindestens einer heissiegelbaren Schicht aus einem Ethylencopolymerisat aus wenigstens 50 Mol-% Ethyleneinheiten und
3) gegebenenfalls einer zwischen den Schichten 1) und 2) üblichen Kleb- oder Haftvermittlerschicht besteht.

Ein weiterer Gegenstand der Erfindung sind faltenfreie Tiefziehverpackungen, insbesondere für Lebensmittel, wie Wurst und Fleisch, die aus den erfindungsgemässen Verbundfolien hergestellt worden sind.

Zur Herstellung der zur Flächenversiegelung geeigneten Schicht 2) können Copolymere des Ethylens und $\alpha,\beta$-ungesättigten Monomeren, wie beispielsweise $\alpha,\beta$-ungesättigten Monocarbonsäuren mit $C_3$–$C_5$, die aus mindestens 50 Mol-% Ethylen aufgebaut sind, verwendet werden. Vorzugsweise enthalten die Copolymere 2–25 Mol-% $\alpha,\beta$-ungesättigte Monocarbonsäureeinheiten, die gegebenenfalls teilweise oder ganz als Alkali-, Erdalkalimetall- oder Zn-Salz wie beispielsweise Zn- und/oder Ca-Salze vorliegen. Der Schmelzindex der Copolymere sollte im Bereich von 0,5–40 g/10 min, vorzugsweise 1,5–5,0 g/10 min, gemessen nach DIN 53 735 liegen. Besonders bevorzugt werden Copolymerisate aus Ethylen/(Meth)acrylsäure mit 2–25 Mol-%, vorzugsweise mindestens 10 Mol-% (Meth)acrylsäureeinheiten, die als Zink- und/oder Ca-Salze vorliegen (Ionomerharze), verwendet.

Zur Herstellung der Schicht 2) sind auch gegebenenfalls modifizierte Ethylen/Vinylacetat-Copolymerisate mit 2–40 Gew.-%, vorzugsweise mit 3–10 Gew.-%, Vinylacetateinheiten geeignet. Vorzugsweise sind aber auch quartäre Polymere geeignet, die aus 71 bis 90 Gew.-% Ethylen, 3 bis 9 Gew.-% einer aliphatischen, ethylenisch ungesättigten Carbonsäure mit $C_3$–$C_5$, 1 bis 20 Gew.-% eines Esters einer aliphatischen, ethylenisch ungesättigten Carbonsäure mit Alkoholen, die $C_1$–$C_8$ enthalten, sowie aus 0,3 bis 5 Gew.-%, vorzugsweise 0,8 bis 3 Gew.-%, Isobutylen aufgebaut sind, wobei die Summe der Gew.-% jeweils 100 betragen muss. Besonders bevorzugt sind dies Ethylen-Vinylacetat-Copolymere, die neben Vinylacetateinheiten, aus 71–90 Gew.-% Ethylen, 3–9 Gew.-% Acrylsäure, 1–20 Gew.-% der t-Butylesters der Acrylsäure und 0,8–3 Gew.-% Isobutylen aufgebaut sind.

Insbesondere bei Verwendung der genannten Vinylacetatcopolymere zur Herstellung der Heisssiegelschicht sollte die Verbundhaftung durch eine übliche Haftvermittlerschicht 3), vorzugsweise auf Basis der oben beschriebenen Ionomerharze zwischen der Trägerfolie aus Copolyamid und der Heisssiegelschicht aus Ethylencopolymerisaten angebracht werden oder auf Basis des oben beschriebenen Ethylen/Vinylacetat-Copolymerisates.

Es ist auch möglich, die Ionomerenharze den Copolyamiden in Menge 5–30 Gew.-% zuzumischen, um so die Verbundhaftung zu erhöhen.

Um die Gasdurchlässigkeit, insbesondere für $O_2$ zu erniedrigen, ist es vorteilhaft, den Copolyamiden Ethylenvinylacetat mit 50–80 Gew.-% Vinylacetateinheiten, die zu mindestens 90% verseift sind, die Mengen von 5–30 Gew.-% zuzugeben und daraus die Trägerfolie herzustellen.

Die erfindungsgemässen Verbundfolien sollten eine Dicke von 90–300 μm, vorzugsweise 160–250 μm, aufweisen, um so genügend stabile Tiefziehverpackungen zu ergeben. Dabei sollte für die Copolyamidschicht eine Dicke von 40–120 μm, vorzugsweise 60–100 μm, und für die Heisssiegelschicht eine Dicke von 50–200 μm, vorzugsweise 100–180 μm eingehalten werden.

Die erfindungsgemässen Verbundfolien werden nach üblichen Verfahren, vorzugsweise durch Coextrusion nach dem Folienblasverfahren hergestellt und dabei 1:2–1:6, vorzugsweise 1:3–1:4, aufgeweitet, um nach dem Tiefziehen der Verpackung einen Volumenschrumpf von mindestens 40% zu gewährleisten.

Die Verpackungen, vorzugsweise für Lebensmittel, die Wurst oder Fleisch, werden auf üblichen Tiefzieh-Verpackungsmaschinen aus den erfindungsgemässen Verbundfolien hergestellt.

Um faltenfrei verpackte Produkte zu bekommen, bieten sich folgende Behandlungsmethoden der erfindungsgemässen Tiefziehverpackungen an:

a) Die gefüllte Tiefziehverpackung wird in der Maschine evakuiert und dann versiegelt. Anschliessend wird sie 1–5 s bei 80–100°C, vorzugsweise 85–95°C durch Tauchen in ein Wasserbad geschrumpft.

b) Die gefüllte, versiegelte Tiefziehverpackung wird kurze Zeit einer Heissluftbehandlung bei 170–240°C, vorzugsweise bei 220–240°C, bevorzugt in einem Heissluft- oder Heissdampftunnel unterworfen.

c) Es ist auch möglich die Schrumpfung durch Kontaktwärme in der Tiefziehverpackungsmaschine zu bewirken. Hierzu wird die Verpackung, die bereits gefüllt ist, unter Verwendung eines geeigneten Siegelwerkzeuges zur Flächenversiegelung – am besten oben und unten – in der Vakuumkammer der Tiefziehmaschine versiegelt und gleichzeitig zur Schrumpfung gebracht. Die Flächenversiegelung dient darüber hinaus dem Zweck, ein bei vielen Lebensmitteln oft beobachtetes Austreten von Saft zu unterbinden.

Die erfindungsgemässen Verpackungen haben nicht nur ein faltenfreies Aussehen, sondern zeichnen sich auch durch verbesserte mechanische Festigkeit, Durchstosswiderstand und Biegebruchfestigkeit aus, da die durch den Tiefzug ausgedünnten Ecken der Folienmulde durch den Schrumpfvorgang beträchtlich an Dicke und mechanischer Stärke zurückgewinnen. Damit einhergehend wird eine Verringerung der Gas- und Wasserdampfdurchlässigkeit der Mulde und so eine längere Haltbarkeit der Lebensmittel bewirkt.

Beispiel 1

Aus einem Copolyamid 6/12 aus 98 Gew.-% ε-Caprolactam und 2 Gew.-% Laurinlactam und aus einem Ethylen(meth)acrylsäurecopolymerisat mit Schmelzindex 5,0 g/10 min (Surlyn®) wird durch Coextrusion unter folgenden Bedingungen eine Verbundfolie hergestellt: Temperaturen im Werkzeug 235–240°C, im Extruder (für Schicht 1) 230–245°C, bei einer Drehzahl von 50 U/min, (für Schicht 2) 235–240°C bei einer Drehzahl von 70 U/min; Abzugsgeschwindigkeit ca. 9 m/min, Aufblasverhältnis 1:2. Die hierbei erzielte gesamte Folienschlauchdicke liegt bei 160 µm.

Beispiel 2

Für eine Verbundfolie bestehend aus einer Copolyamid 6/12-Schicht (wie Beispiel 1) und einer Ethylen-Vinylacetat-Copolymerschicht, mit 8 Gew.-% Vinylacetateinheiten und mit einem Schmelzindex von 1,3 g/10 min werden die Schichten unter denselben Bedingungen wie in Beispiel 1 nach dem Folienblasverfahren hergestellt und die beiden Folienschichten mittels eines handelsüblichen Klebstoffs auf Polyurethanbasis miteinander verbunden.

Beispiel 3

Schicht 1) einer Verbundfolie bestehend aus einer Mischung aus 10 Gew.-% eines handelsüblichen Ionomerharzes, 20 Gew.-% eines Ethylenvinylalkoholpolymeren (70 Gew.-% Vinylalkohol) und 70 Gew.-% Copolyamid 6/12 (wie Beispiel 1) und Schicht 2) bestehend aus einem Ethylen-Vinylacetat-Copolymer mit einem VAc-Gehalt von 8 Gew.-% werden als Blasfolien unter denselben Bedingungen, wie in Beispiel 1 beschrieben, hergestellt und mit Hilfe eines handelsüblichen Klebstoffs aus Polyurethanbasis miteinander verbunden (Schicht 3).

### Tabelle

| | Zusammensetzung Schicht 1) | Schicht 2) | Dicke der Folie gesamt 1)/2) µm | Schrumpf*) % |
|---|---|---|---|---|
| Beispiel 1 | Co PA-6/12 | Ionomerharz | 60/100 | 75 |
| Beispiel 2 | Co PA-6/12 | EVA | 60/120 | 45 |
| Beispiel 3 | 70% Co PA-6/12 + 10% Ionomerharz + 20% Ethylenvinylalkohol | EVA | 60/120 | 50 |
| Vergleichsbeispiel | PA-6 | Ionomerharz | 60/120 | 30 |

* Berechnet aus dem Volumenschrumpf einer 100 mm tiefgezogenen Mulde 100 × 100 mm mit einem ausgeliterten Volumen von 1000 ml im Wasserbad bei 85° C 5 s.

**Patentansprüche**

1. Heisssiegelbare, durch Tiefziehen schrumpffähige Verbundfolie, dadurch gekennzeichnet, dass sie aus

1) mindestens einer Schicht aus wenigstens einem Copolyamid mit Laurinlactam- und mit mindestens 50 Gew.-% ε-Caprolactameinheiten und einer Schmelztemperatur von 75–215°C und gegebenenfalls einem verseiften Ethylen-/Vinylacetatcopolymerisat und/oder Ionomerharz,
2) mindestens einer heisssiegelbaren Schicht aus einem Ethylencopolymerisat aus wenigstens 50 Mol-% Ethylen und gegebenenfalls
3) einer zwischen den Schichten 1 bis 2 üblichen Kleb- und Haftvermittlerschicht besteht.

2. Verbundfolie nach Anspruch 1, dadurch gekennzeichnet, dass die Schicht 2) aus einem Copolymerisat des Ethylens und einer $\alpha,\beta$-ungesättigten Monocarbonsäure mit $C_3$–$C_5$, die bis zu 100% als Salz vorliegen kann, oder gegebenenfalls modifizierte Ethylen/Vinylacetat-Copolymerisaten besteht.

3. Verbundfolie nach Ansprüchen 1–2 dadurch gekennzeichnet, dass die Schicht 2) aus einem Copolymerisat des Ethylen/(Meth)acrylsäure mit 2–25 Mol-% (Meth)acrylsäureeinheiten, die als Zink- und/oder Ca-Salze vorliegen können, oder einem Ethylen/Vinylacetat-Copolymerisat mit 2–40 Gew.-% Vinylacetateinheiten oder einem quartären Polymeren, das aus 71 bis 90 Gew.-% Ethylen, 3 bis 9 Gew.-% einer aliphatischen, ethylenisch ungesättigten Carbonsäure mit $C_3$–$C_5$, 1 bis 20 Gew.-% eines Esters einer aliphatischen, ethylenisch ungesättigten Carbonsäure mit Alkoholen, die $C_1$–$C_8$ enthalten, sowie aus 0,3 bis 5 Gew.-% Isobutylen aufgebaut ist, wobei die Summe der Gew.-% jeweils 100 betragen muss, besteht.

4. Verbundfolie nach Ansprüchen 1–3 dadurch gekennzeichnet, dass die Folie eine Dicke von 90–300 μm aufweist.

5. Verbundfolie nach Ansprüchen 1–4 dadurch gekennzeichnet, dass die Schicht 1) 60–100 μm und die Schicht 2) 100–180 μm dick ist.

6. Faltenfreie Tiefziehverpackungen, insbesondere für Lebensmittel, aus einer Verbundfolie nach Ansprüchen 1–5.

7. Tiefziehverpackungen nach Anspruch 6 für Wurst- und Fleischwaren.

**Claims**

1. A heat-sealable composite film which is shrinkable by deep drawing, characterised in that it consists of

1) at least one layer of at least one copolyamide containing lauric lactam and containing at least 50% by weight of ε-caprolactam units and having a melting temperature of 75–215°C and, optionally, a saponified ethylene/vinyl acetate copolymer and/or an ionomer resin,
2) at least one heat-sealable layer of an ethylene copolymer comprising at least 50 mol% of ethylene and, optinally,
3) a customary adhesive and adhesion-promoting layer between layers 1. and 2.

2. A composite film according to Claim 1, characterised in that layer 2) consists of a copolymer of ethylene and an $\alpha,\beta$-unsaturated monocarboxylic acid with $C_3$–$C_5$, which can be present to an extent of up to 100% in the form of a salt, or optionally modified ethylene/vinyl acetate copolymers.

3. A composite film according to Claims 1–2, characterised in that layer 2) consists of a copolymer of ethylene/(meth)acrylic acid containing 2–25 mol% of (meth)acrylic acid units which can be present in the form of zinc and/or Ca salts, or of an ethylene/vinyl acetate copolymer containing 2–40% by weight of vinyl acetate units or of a quaternary polymer which is composed of 71 to 90% by weight of ethylene, 3 to 9% by weight of an aliphatic, ethylenically unsaturated carboxylic acid with $C_3$–$C_5$, 1 to 20% by weight of an ester of an aliphatic, ethylenically unsaturated carboxylic acid with alcohols containing $c_1$–$C_8$, and 0.3 to 5% by weight of isobutylene, the sum of the % by weight having to be 100 in each case.

4. A composite film according to Claims 1–3, characterised in that the film has a thickness of 90–300 μm.

5. A composite film according to Claims 1–4, characterised in that layer 1) is 60–100 μm thick and layer 2) is 100–180 μm thick.

6. Pleat-free deep-drawn packings, in particular for foods, consisting of a composite film according to Claims 1–5.

7. Deep-drawn packings according to Claim 6 for sausage and meat products.

**Revendications**

1. Feuille composite thermosoudable et rétractable par emboutissage profond, caractérisée en ce qu'elle est constituée:
1) d'au moins une couche d'au moins un copolyamide comportant du laurolactame et au moins 50% en poids de motifs d'ε-caprolactame et ayant une température de fusion de 75–215°C, ainsi qu'éventuellement d'un copolymère saponifié d'éthylène/acétate de vinyle et/ou d'une résine d'ionomère.
2) d'au moins une couche thermosoudable constituée d'un copolymère d'éthylène comprenant au moins 50% molaires d'éthylène, et éventuellement
3) d'une couche collante et adhésive habituelle entre les couches 1) et 2).

2. Feuille composite suivant la revendication 1, caractérisée en ce que la couche 2) est constituée d'un copolymère d'éthylène et d'un acide monocarboxylique $\alpha,\beta$-insaturé en $C_3$–$C_5$ qui peut se

présenter jusqu'à 100% sous forme d'un sel, ou de copolymères d'éthylène/acétate de viyle éventuellement modifiés.

3. Feuille composite suivant les revendications 1–2, caractérisée en ce que la couche 2) est constituée d'un copolymère d'éthylène/acide (méth)acrylique avec 2-25% molaires de motifs d'acide (méth)acrylique pouvant se présenter sous forme de sels de zinc et/ou de calicum, ou d'un copolymère d'éthylène/acétate de vinyle comportant 2-40% en poids de motifs d'acétate de vinyle ou encore d'un polymère quaternaire constitué de 71 à 90% en poids d'éthylène, de 3 à 9% en poids d'un acide carboxylique aliphatique à insaturation éthylénique en $C_3$–$C_5$, de 1 à 20% en poids d'un ester d'un acide carboxylique aliphatique à insaturation éthylénique avec des alcools en $C_1$–$C_8$, ainsi que de 0,3 à 5% en poids d'isobutylène, la somme des pour-cent en poids devant chaque fois atteindre 100.

4. Feuille composite suivant les revendications 1–3, caractérisée en ce qu'elle a une épaisseur de 90-300 µm.

5. Feuille composite suivant les revendications 1–4, caractérisée en ce que la couche 1) a une épaisseur de 60-100 µm et la couche 2), une épaisseur de 100-180 µm.

6. Emballages emboutis profond exempts de plis, en particulier, pour produits alimentaires, constitués d'une feuille composite suivant les revendications 1-5.

7. Emballages emboutis profond suivant la revendication 6, pour produits de boucherie et de characuterie.